# EUROPEAN PATENT APPLICATION

(11) **EP 3 440 941 A1**
(43) Date of publication of application: **13.02.2019**
(21) Application number: 17778529.2
(22) Date of filing: 06.04.2017
(51) Int. Cl.: A23B 4/10, A23B 4/24, A23L 3/34, B29D 7/01, B65D 81/28

(54) **BIODEGRADABLE, ANTIOXIDANT AND ANTIMICROBIAL POLYMER COMPOSITION FROM MYRTLE LEAVES**

(30) Priority: 08.04.2016 CL 2016817
(71) Applicant: Universidad De Santiago De Chile, CP 9170022, Estación Central Santiago (CL)
(72) Inventor: LOPEZ DE DISCASTILLO BERGAMO, Ana Carolina, O'Higgins 3363 Santiago (CL); GALOTTO, Maria Jose, O'Higgins 3363 Santiago (CL); GUARDA, Abel, O'Higgins 3363 Santiago (CL); BRUNA, Julio, O'Higgins 3363 Santiago (CL)
(74) Representative: Pons
(86) International application number: PCT/CL2017/050018
(87) International publication number: WO 2017/173557

(57) **Abstract**

The present invention relates to a biodegradable polymer composition with antioxidant and antimicrobial properties, useful for actively preserving foods, pharmaceuticals or products in general for human or animal consumption. The present composition comprises a biodegradable polymer matrix, wherein the polymer is selected from the group consisting of poly(lactic acid) or PLA, polyhydroxybutyrate or PHB, polyhydroxybutyrate-co-valerate or PHBV, and polycaprolactone or PCL, and further comprises myrtle leaves as the source of active antioxidant or antimicrobial compounds, including polyphenols, and at least one vegetable or organic oil selected from the group consisting of olive oil, sunflower oil, avocado oil, soybean oil, soy lecithin or a mixture thereof, as the plasticiser. The present composition exhibits satisfactory antioxidant and antimicrobial activity. The present invention also relates to the method for preparing the above composition.

## Description

### Field of the Invention

The present invention relates to a biodegradable polymer composition useful antioxidant and antimicrobial capacity for active food packaging, pharmaceuticals, or in general, products for human or animal consumption. The present composition comprises a biodegradable polymer matrix, wherein the polymer is selected from the group consisting of poly (lactic acid) or PLA, polyhydroxybutyrate or PHB, polyhydroxybutyrate-co-valerate or PHBV and policarolactona or PCL, and further comprising, leaves myrtle as source compounds active antioxidants or antimicrobials, including polyphenols, and at least one vegetable or organic oil selected from the group consisting of olive oil, sunflower oil, avocado oil, soybean oil, soy lecithin or a mixture thereof, as plasticizer.

### Prior art

For many oxidation-sensitive food, based on the removal of oxygen by vacuum free oxygen atmospheres or active with oxygen scavenging packaging strategy may not be a satisfactory solution because optimal conditions established for the growth of pathogenic microorganisms or pigmentation changes involving a consumer rejection. For such products - among which are: fresh meat, it is necessary other protection, and can also offer active packaging technologies appropriate solutions.

Several developments in active packaging are based on the incorporation of synthetic substances such as butylhydroxytoluene (BHT) to conventional polyolefins (Wessling, C, Nielsen, T., Leufven, A., Jagerstad, M. (1998). Mobility of alpha- tocopherol and BHT in LDPE in contact with food additives fatty food simulants and Contaminants 15 (6), 709- 715; Torres-Arreola, W., Soto-Valdez, H., Peralta, E., Clark-Lopez, J. L, Ezquerra-Brauer, JM (2007). Effect of a low-density polyethylene film containing butylated hydroxytoluene on lipid oxidation and protein quality of fish saw (Scomberomorus saw) muscle during frozen storage. Journal of Agricultural and Food Chemistry 55 (15), 6140 -6146). Safety synthetic antioxidants have been discussed extensively, so have the same legal limitations. The BHT and butilhiroxianisol compounds (BHA), for example, are not mutagenic but are able to modify the action of certain carcinogens. BHT for example, at relatively high doses, affects reproduction in rats, especially the number of pups per litter and growth rate during the lactation period. Based on these data, the World Health Organization (WHO) has recently reduced the acceptable daily intake. In general, because of doubts about possible toxicity synthetic antioxidants are being questioned and there is growing interest in replacing these compounds by naturally occurring antioxidants. The present invention addresses this problem and proposes to replace these synthetic substances and natural plant extracts indigenous fruits of Chile.

Many foods contain antioxidant compounds in its composition, particularly plant products. A very interesting group of antioxidants found in plants are polyphenols, group of chemicals characterized by the presence of more than one phenol group per molecule. Research indicates that polyphenols may also have potential health benefits, even to reduce the risk of cardiovascular disease and cancer (Cao, GH, Sofic, E., Prior, RL (1996). Antioxidant capacity of tea and common vegetables Journal of Agricultural and Food Chemistry 44 (1: 1), 3426-3431;. Masuda, T., Inaba, Y., Maekawa, T., Takeda, Y., Yamaguchi, H., Nakamoto, K., Kuninaga, H., Nishizato, S., Nonaka, A. (2003). Simple detection powerful method of antiradical compounds in the raw extract of plants and Its Application for the Identification of antiradical Constituents plant. Journal of Agriculture! and Food Chemistry 51 (7), 1831 -1838). Polyphenols are divided according to their structure tannins, lignins and flavonoids, the latter being highly regarded for their high antioxidant capacity compounds. Natural pigments present in vegetables, seeds, fruit and drinks like wine and beer, contain high content of flavonoids and their antioxidant activity is widely studied (Barclay, LRC, Edwards, CE., Vinqvist, MR (1999). Media effects on antioxidant activities of phenols and catechols Journal of the American Chemical Society 121 (26), 6226-6231; Florez Martinez, S., Gonzalez-Gallego, J., Adders, JM, trunnion, MJ (2002). flavonoids: properties and antioxidant actions Nutr.Hosp XVII (6), 271 -278). Regarding antimicrobial compounds, it has been recognized effectiveness presenting essential oils (Lambert, R., Skandamis, P. (201 1). A study of minimum inhibitory concentration and mode of action of oregano essential oil, thymol and carvacrol. Journal Appl. Microbiol. 91, 453-462). They are aromatic organic oils obtained from plant extracts which also have antiviral, antifungal, antiparasitic and insecticidal. And most importantly, its use as a food additive permitted by regulatory agencies (Burt, S. (2004) Essential oils: their antibacterial properties and potential applications in foods - a review International Journal of Food Microbiology 94, 223-.. 253).

The present invention relates primarily to materials with antimicrobial and antioxidant capacity to extend the life of food. But in addition to combat the problem of oxidation and microbial attack, with the development of active packaging with natural antioxidants also, it is possible to solve another problem is to provide a substitute to synthetic polymer additives. To improve the behavior and properties of the containers, the polymers are added a variety of additives, among which are common synthetic antioxidants, which are incorporated in different concentrations to reduce degradation during the transformation process in containers. Because of its potential toxicity that might arise from its migration into food, coupled with increasing consumer demand for products with chemical fewer components, there is great interest in the industrial sector by the replacement of these synthetic substances by natural antioxidants compounds. Incorporation of these natural compounds may then have a double function, in addition to protect the plastic, its migration to the packaged product, can produce an antioxidant effect in the food.

In the prior art the CN104893262 documents discloses a feed bag of high strength and method of preparation thereof from mixing polyethylenterephtalate or phenylphenol, fillers, a coupling agent, silk, asbestes, white carbon black, fructus gleditsiae (Chinese herb), dracaena leaves fruticose, diatomite, bran, hemp palm, bamboo clothing, starch, rhizome alpiniae officinarum, rhizome cimicifugae, nail and flos magnolia and subjected to heat treatment to form a mixture which is extruded to prepare a plastic film and process for feeding bag high strength.

Thus, the prior art has referred only to antioxidant and antimicrobial power Myrtle leaf extracts with various objectives (human health, additives or food preservatives for drugs, etc.). The prior art does not refer to the use of active sheets Myrtle food package.

### Brief Description of the Invention

The present invention relates to the area of food preservation, pharmaceuticals, or in general, products for human or animal consumption that are susceptible to damage by oxidation or microbial contamination. The present invention aims to provide a biodegradable polymeric composition of polymeric material comprising a-valerate polyhydroxybutyrate-co or PHBV and policarolactona or PCL, biodegradable polymer selected from the group consisting of poly (lactic acid) or PLA, polyhydroxybutyrate or PHB and also comprises leaves myrtle as a source of compounds active antioxidants or antimicrobials, including polyphenols, and at least one vegetable oil or organic selected from the group consisting of olive oil, sunflower oil, avocado oil, soybean oil, soy lecithin or a mixture thereof, as a plasticizing agent. The polymer composition comprises 3-8% w / w and myrtle leaf 5-20% w / w of plasticizer.

The present composition is useful for use as an active packaging foods prone to oxidation and microbial attack. The present invention has as main characteristic when compared with active packaging materials used today, the incorporation of myrtle leaf directly, without first making an extraction process.

### Brief Description of the Figures

**Figure 1** Photograph of antioxidants and antimicrobial materials.
**Figure 2** Kinetics of antioxidant activity of the polymer composition in various food simulants PLA_MU.

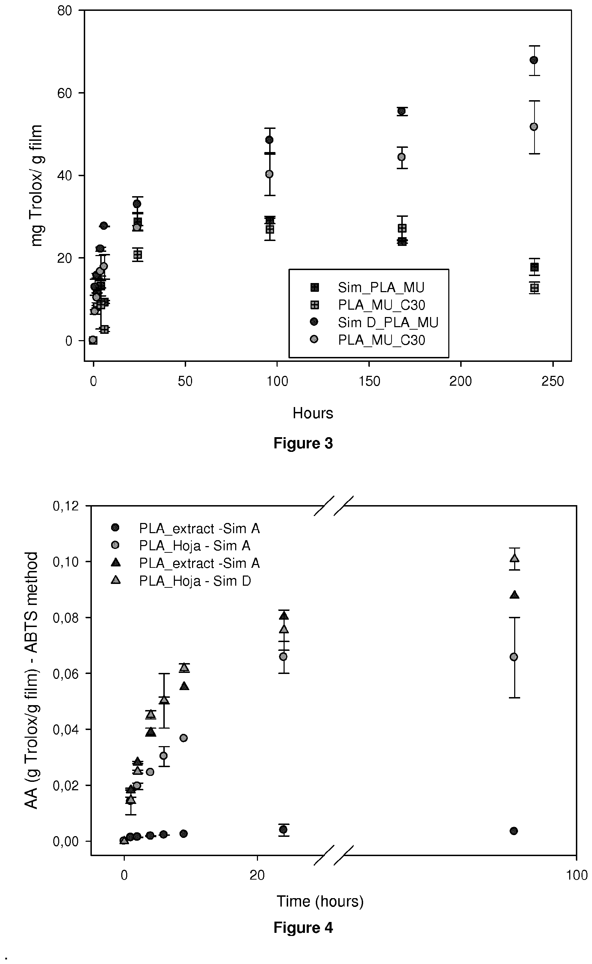

**Figure 3** Kinetics of antioxidant activity of the polymeric compositions PLA_MU and PLA_MU_C30 in different food simulants.
**Figure 4** Kinetics of antioxidant activity of the materials involved in food simulants A and D.

### Brief Detailed of the Invention

The present invention relates to a biodegradable polymer composition useful antioxidant and antimicrobial capacity for active food packaging, pharmaceuticals, or in general, products for human or animal consumption that are susceptible to damage by oxidation or microbial attack. The main feature of the present biodegradable polymer composition is comprising a polymer matrix of a polymer selected from the group consisting of poly (lactic acid) or PLA, polyhydroxybutirate or PHB, polyhydroxybutirate-co-valerate or PHBV and polycaprolactone or PCL as a base, and further it comprising, leaves myrtle as a source of compounds antioxidants active or antimicrobials, including polyphenols and at least one organic vegetable oil or selected from the group consisting of olive oil, sunflower oil, avocado oil, soybean oil, lecithin soy or a mixture thereof, as plasticizer agent.

### Examples

### Example 1: Preparation of leaf myrtle

First we proceeded to wash sheets myrtle to clean any dirt. This was followed by drying in an oven leaves Binder FD January 15 for 7 days at WC. Subsequently reduced in size by a grinder brand Cole Parmer 4301 -02 R/T, and finally passed through a 200 mesh sieve to obtain particles of this form with less than 75-85 µm size, preferably 75 µm. That is, particles less than or equal to 85 µm size.

### Example 2: Production process of PLA/MU biocomposite

The present invention comprises a (antioxidant and antimicrobial) active based material PLA or poly (lactic acid) as polymer matrix. For its preparation, the PLA was dried for 72 hours at 60° to remove as much moisture polymer matrix. Subsequently, the sheet sieved Myrtle (MU) and PLA were mixed manually in order to homogenize the material. Myrtle sheet joined directly, without passing through any extraction process. It was incorporated at a concentration of 5% by weight of the polymer (PLA). Furthermore, finally olive oil (AO) joined as plasticizer agent, at a concentration also 5% by weight of the polymer. The PLA/MU/AO, premixed manually mixture was extruded in a twin screw extruder model brand ScientifLab Tech LTE20, keeping the operating conditions of the equipment constant:

**Table 1. Operating conditions of the extrusion**

| Condition | Value |
|---|---|
| Twin screw speed (rpm) | 30 |
| Feeding speed (rpm) | 21 |
| Motor efficiency (%) | 50 |
| Cooling roll speed (rpm) | 3 |

It notes that was also obtained by extrusion white materials, i.e. without myrtle leaves incorporated, to study the effect of incorporation of myrtle leaf in physical and morphological properties of the polymer.

Parallel also carried out to obtain a material with nanoclay Cloisite C30 (C30) to study the effect of developing a nanobiocomposito on the physical properties and especially the release of active agents. The nanoclay also joined 5% w/w relative to the polymer weight. In short, the materials were obtained by extrusion and named as follows:
PLA: polymer composition only PLA polymer (White total)
PLA_AO: PLA polymer polymer composition + 5% w/w of olive oil (White plasticizer)
PLA_MU: polymer composition with 7.5% w/w of myrtle leaves and 5% w/w of olive oil (AO).
PLA_MU_C30: active polymer composition with 7.5% w/w of myrtle leaves + 5% w/w nanoclay Cloisite C30 + 5% w/w of olive oil (AO). Importantly, the end of the melt blend in the extruder, is coupled a nozzle plate in order to obtain a sheet, where the material is received in a system of chill roll cooled obtain this sheet form with controlled thickness approximately 75-90 µm and a width of 10-12 cm.

Table 2 extrudates and amounts used of each component are summarized.

**Table 2. Components and their masses used for obtaining different biodegradable polymeric compositions.**

| | **PLA (g)** | **MU (g)** | **AO (g)** | **Nanoclay (g)** |
|---|---|---|---|---|
| PLA | 300 | | | |
| PLA_AO | 300 | | 15 | |
| PLA_MU_AO | 300 | 22,5 | 15 | |
| PLA_MU_AO_C30 | 300 | 22,5 | 15 | 15 |

### Example 3: Characterization of the biocomposite developed active

### Measurement of total antioxidant capacity

### Methodology:

The method ABTS antioxidant activity, based on the decrease in absorbance of ABTS radical cation ABTS^{·+} (2,2'-azino-bis-(3-etilibenzotiazolin-6-sulfonic acid) in order to determine the antioxidant activity was used total biodegradable polymer composition obtained.

First, extractions were performed in a water: ethanol (EtOH) (50:50) as previously deduced that this mixture was the most effective for extracting active compounds myrtle leaf. For this, three film samples of biodegradable polymer composition (0.5 g of each blade) were weighed and stirred with 50 ml of 50% ethanolic mixture for 2 h at a temperature of 60. The extracts obtained are analyzed according to Folin Cicolteau methods and ABTS assay to measure total phenolic content and total antioxidant activity of the sheets of the biodegradable polymer composition respectively.

### Results:

Folin Cicolteau quantifies the total polyphenol content of the materials myrtle leaf. As the results observed in Table 3, the polyphenol content was higher for materials without incorporated nanoclay. Possibly the nanoclay to react in some way with the active compounds of myrtle leaf getting caught, and decreasing its extraction.

In parallel, also it proceeded to measure total antioxidant activity from ABTS method, which indicates the free radical scavenging ability of ABTS^{'+} (2,2'-azino-bis-(3-etillbenzotiazolin-6-sulfonic acid). The antioxidant activity, as expected is proportional to polyphenolic content of the materials, showing improved performance also without nanoclay materials.

**Table 3. Values extraction of antioxidants and antimicrobial materials.**

| Active Sheet | Polyphenolic Content (mg galic acid/g sheet) | Antioxidant Activity (mg Trolox/g sheet) |
|---|---|---|
| PLA_MU | 9.4 ± 1.8 | 86.2 ± 7.9 |
| PLA_MU_C30 | 8.8 ± 0.9 | 52.3 ± 2.3 |

### Release kinetics of the active compounds in food simulants

### Methodology:

Specific migration analysis were conducted in compliance with the rules of the legislation of the US Food and Drug Administration (FDA), MERCOSUR and the European Union. Legislation sets the parameters to be met by packaging that will be in contact with food, parameters such as time, temperature and area ratio of polymer-volume simulant. Food simulants are also established by law and are substances able to reproduce the behavior of food to work in a standardized way. Table 4 simulants to set both the FDA and the European Union from Directive 201 1/1 O / CE for each type of food are presented.

**Tabla 4. Simulants accepted by Directive 2011/101/CE.**

| Abbreviation | Food Simulant | Type ofFood |
|---|---|---|
| A | Ethanol 10% | Aqueous foods |
| D1 | Ethanol 50% | Alcoholic foods <20%, fat in water emulsions and dairyproducts |

The methodology used was as follows: active flakes developed polylactic acid and myrtle leaf 3 cm² were placed into tubes with 5 mL of migration food simulant. Sim A: tests were performed under two simulants 10% ethanol aqueous food simulant; Sim and D: 50% ethanol. These tubes were placed in an oven at 40 for 10 days. Periodically P is performing measurements were total migration of active compounds from the indirect measurement of antioxidant activity of food simulant from the method of free radical ABTS abduction.

### Results:

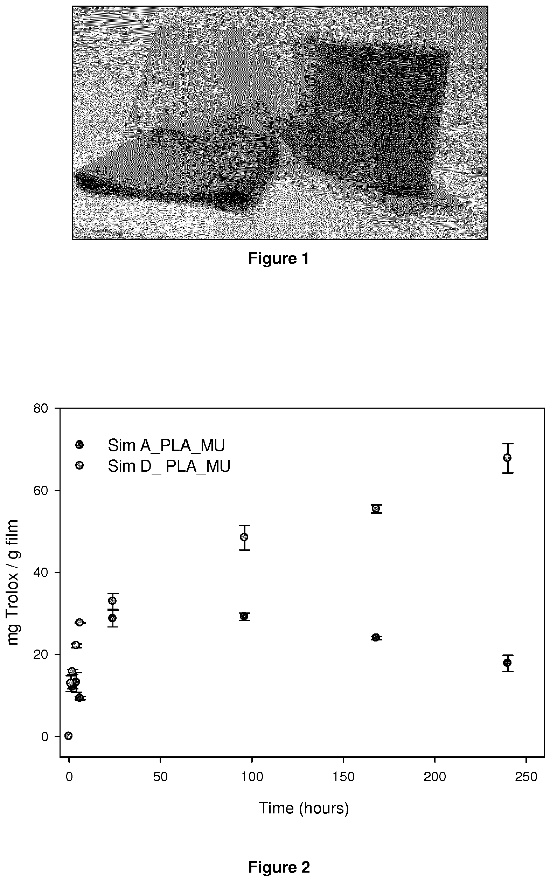

As seen in Figure 2, the materials showed an interesting ability to release antimicrobial and antioxidant compounds in both food simulants, leading to an interesting antioxidant capacity.

The release kinetics followed an exponential growth tended to a maximum, although the simulant ethanol content greater than 10 days reached no such balance. This highlights its prolonged activity over time. The release of the antioxidant and antimicrobial compounds from myrtle leaf material to feed it simulant is higher in the simulant since its composition more conducive ethanolic content release polyphenolic compounds. Although release is less in the simulant A, the values obtained are equally important since release in aqueous foods polyphenolic compounds is always low, and in many previously developed materials is zero.

### Thermal properties - Differential Scanning Calorimetry

### Methodology:

Differential Scanning Calorimetry was used to study the thermal properties of the sheets. This technique involves placing approx. 7 mg of each sheet in capsules and measured on a Mettler Toledo DSC 822e with a heating rate of 10°C/min from 25 until 220°C from these results values glass transition temperature (Tg) are obtained, enthalpies (H) and melting temperature (Tm, its acronym, "melting temperature"), and the fraction of crystallinity of the sheets (Xc).

### Results:

**Table 4 properties obtained in the first heating differential scanning calorimetry.**

| **Sample** | **Tg** | **Tcc** | **ΔHcc** | **ΔHm** | **Tm** | **Xc** |
|---|---|---|---|---|---|---|
| **PLA** | 56,1 ± 0,5 | 111,9 ± 0,3 | 25,2 ± 1,1 | 27,7 ± 1,9 | 149,3 ± 2,7 | 2,7 ± 0,8 |
| **PLA_AO** | 51,3 ± 1,1 | 105,1 ± 1,6 | 23,3 ± 0,6 | 25,4 ± 1,9 | 152,9 ± 1,1 | 1,5 ± 0,9 |
| **PLA_MU** | 52,05 ± 0,8 | 115,9 ± 8,6 | 21,9 ± 4,4 | 23,1 ± 0,8 | 151,5 ± 2,1 | 1,2 ± 0,8 |
| **PLA_MU_C30** | 45,7 ± 5,4 | 107,3 ± 0,2 | 20,5 ± 0,2 | 24,5 ± 0,2 | 148,3 ± 5,4 | 4,2 ± 0,5 |

The values in Table 4 show that the incorporation of olive oil had plasticizing effect, decreasing for all materials obtained the value of the glass transition temperature, so that its addition originated less rigid materials. White materials with olive oil and antioxidants and antimicrobials myrtle leaf showed Tg values very similar, but the antioxidant and antimicrobial nanocomposite (active) showed a greater decrease in rigidity and it appears that the nanoclay has a plasticizing effect.

### Barrier properties - permeability to water vapor

### Methodology:

The transmission rate of water vapor was measured using a Water Vapor Permeability Meter, Mocon Permatran W3/31. The measurement conditions were 37 and 90% relative humidity. Infrared detector was used to quantify the transmission of water vapor (water steam transmitance, WVTR).

### Results:

**Table 5 Values vapor permeability water of extruded sheets**

| | WVP (kg.m/m².s.Pa). 10¹⁵ |
|---|---|
| PLA | 1.9 ± 0.2^{b} |
| PLA_AO | 3.2 ± 0.3^{a} |
| PLA_MU_AO | 1.1 ± 0.1^{c} |
| PLA_MU_C30 | 3.2 ± 0.1^{a'} |

As expected the addition of a plasticizer, in this case olive oil, it increases the permeability of the material. However, very positively in the case of active materials it decreases permeability. Incorporating sheet Myrtle improved barrier property of the PLA.

On the other hand, although many studies indicate that incorporating nanoparticles improve the barrier properties of the biocomposite, in this case, the composition with nanoclay Cloisite C30 presented values greater permeability. Optical properties materials were obtained satisfactorily with good appearance and they had a green-brown due to the incorporation of sheet myrtle 7.5% concentration, as shown in the figure 1.

### Previous study to decide how Incorporation sheet Myrtle

Once decided the use of myrtle leaves as a source of antioxidants and antimicrobials for development of active materials, the results of myrtle leaves incorporated into the polymer as an extract and directly compared. For this developed, three types of materials:
PLA BLN: Material Control
PLA_EXTMu: antioxidant and antimicrobial material (active) based on poly (lactic acid)
(PLA) and a hydroalcoholic extract of myrtle leaves incorporated 5%.
PLA_HojaMu: active material based on poly (lactic acid) (PLA) and myrtle leaves ground and sieved, but spiked directly with the polymer and at a concentration of 5% also on the weight of PLA.

Materials obtained by extrusion under the same conditions described in Example 2.

Later these materials were characterized to compare their physical properties and their antioxidant capabilities.

**Table 6 Values for extracting the biodegradable polymer composition of PLA and maximum release values antioxidants and antimicrobials in different simulants.**

| | **ABTS** | | **2,2-difenil-1-pierilhidrazilo (DPPH)** | |
|---|---|---|---|---|
| | gr Trolox/ g sheet | g Trolox/dm² sheet | gr Trolox/ g sheet | g Trolox/dm² sheet |
| EXTRAC(PLA-Ext) | 36.7 ± 6.7 | | 3.4 ± 0.3 | |
| EXTRAC(PLA-Hoja) | **76.7 ± 3.0** | | **7.3 ± 0.1** | |
| PLA-Ext-Sim A | 3.6 ± 6.1 | 1.0 ± 0.6 | | |
| PLA-Hoja-SimA | **65.7 ± 14.0** | **19.0 ± 4.0** | | |
| PLA-Ext-Sim D | 87.0 ± 9.0 | 23.0 ± 2.0 | | |
| PLA-Hoja-SimD | **92.1 ± 4.1** | **27.1 ± 4.1** | | |
| PLA-Ext -95%EtOH | | | 5.4 ± 0.2 | 1.5 ± 0.2 |
| PLA-Hoja - 95%EtOH | | | **5.9 ± 0.1** | **2.6 ± 0.3** |

Thermal properties

**Table 7. Study DSC (Scanning Calorimetry Difference)**

| 1er Heating | | | | | | |
|---|---|---|---|---|---|---|
| **Muestra** | **Tg** | **Tcc** | **ΔHcc** | **ΔHm** | **Tm** | **Xc** |
| **PLA_BLN** | 60.1 ± 1.7 | 116.1 ± 1.2 | 22.8 ± 0.3 | 24.9 ± 0.3 | 152.3 ± 0.2 | 2.3 ± 0.1 |
| **PLA_EXT Mu** | 61.8 ± 3.9 | 117.2 ± 3.0 | 21.2 ± 1.1 | 24.9 ± 0.9 | 153.1 ± 0.4 | 3.3 ± 0.7 |
| **PLA_Hoja Mu** | 59.4 ± 0.1 | 113.6 ± 0.3 | 20.7 ± 0.4 | 23.8 ± 0.2 | 151.3 ± 0.2 | 3.4 ± 0.6 |
| | | | | | | |

| 2o Heating | | | | | | |
|---|---|---|---|---|---|---|
| **Muestra** | **Tg** | **Tcc** | **ΔHcc** | **ΔHm** | **Tm** | **Xc** |
| **PLA_BLN** | 60.6 ± 0.1 | 116.1 ± 0.1 | 24.0 ± 0.6 | 25.9 ± 0.2 | 152.0 ± 0.1 | 2.1 ± 0.4 |
| **PLA_EXT Mu** | 62.6 ± 2.1 | 118.6 ± 3.0 | 21.9 ± 1.2 | 25.4 ± 0.6 | 153.2 ± 1.2 | 2.8 ± 0.8 |
| **PLA_Hoja Mu** | 58.9 ± 0.4 | 113.1 ± 0.3 | 23.8 ± 0.2 | 26.3 ± 0.6 | 150.2 ± 0.1 | 2.7 ± 0.4 |

These results reveal that the materials incorporated myrtle leaf directly were less rigid, since the values of glass transition temperature (Tg) lower than the material of myrtle extract and even lower than the polymer control. That is, the sheet Myrtle is offering a plasticizer material nature, and therefore gives better processing properties of this material.

**Table 8 Values of mechanical properties.**

| | **Elasticity Module** | **Tension Force** | **Rupture Elongation** |
|---|---|---|---|
| **PLA** | 2111.7 ± 366.1 | 42.1 ± 17.6 | 5.2 ± 1.8 |
| **PLA_EXT Mu** | 966.6 ± 182.9 | 31.7 ± 10.1 | 5.5 ± 2.0 |
| **PLA_Hoja Mu** | 440.9 ± 135.2 | 18.9 ± 2.0 | 2.7 ± 0.7 |

The data show antioxidant activity and extraction materials with sheet myrtle incorporated directly greatest potential for application. Possibly during the extrusion process, due to high temperatures, and the myrtle leaf extract he underwent further degradation.

It is shown in bold in Table 8 that in all analyzes of scavenging activity free radical DPPH and ABTS, which are two methods that simulate and calculate the antioxidant activity of compounds, the values were greater for biodegradable polymeric compositions with sheet myrtle.

The physical properties also showed better potential for sheet materials myrtle, although values of mechanical properties demonstrate the need to use a plasticizer to improve elasticity in the next extrusion.

## Claims

1. Biodegradable polymer composition with antioxidant and antimicrobial capacity for active packaging of food and pharmaceutical products, comprising:
- a biodegradable polymer matrix, wherein at least one polymer is selected from the group consisting of poly (lactic acid) or PLA, PHB polyhydroxybutyrate or polyhydroxybutyrate-co-valerate PHBV and polycaprolactone or PCL,
- at least one active ingredient derived from myrtle leaf as the source of active antioxidants or antimicrobial compounds, including polyphenols, and
- a plasticizing agent, wherein at least one vegetable or organic oil is selected from the group consisting of olive oil, sunflower oil, avocado oil, soybean oil, soy lecithin or a mixture thereof.

2. The biodegradable polymer composition of claim 1 wherein said sheets have a myrtle sieved or less 85 µm size.

3. The biodegradable polymer composition of claim 1 wherein said polymer is poly (lactic acid).

4. The biodegradable polymer composition of claim 1 comprising myrtle leaf in a concentration 3-8% w/w relative to the weight of the polymer matrix.

5. The biodegradable polymer composition of claim 4 comprising myrtle leaf at a concentration 5% w/w relative to the weight of the polymer matrix.

6. The biodegradable polymer composition of claim 1 wherein it comprises said plasticizer in a concentration 5-20% w/w relative to the weight of the polymer matrix.

7. The biodegradable polymer composition of claim 6 wherein it comprises said plasticizer at a concentration 5% w/w relative to the weight of the polymer matrix.

8. The biodegradable polymer composition of claim 6 or 7 wherein said plasticizer is olive oil.

9. The biodegradable polymer composition of claim 1 further comprising nanoclay.

10. The biodegradable polymer composition of claim 9 **characterized by** comprising nanoclay in a concentration of 5% w/w relative to give it weight polymer matrix.

11. Method for preparing a biodegradable polymer composition useful antioxidant and antimicrobial capacity for active food packaging, pharmaceuticals, or in general for human or susceptible to damage by oxidation or microbial attack to animal consumption, comprising the steps of
a) dry myrtle leaves clean, grind and sieving;
b) preparing a polymer matrix of a polymer selected from the group consisting of poly (lactic acid) or PLA, polyhydroxybutyrate or PHB, polyhydroxybutyrate-co-valerate or PHBV and policarolactona or PCL as a base, drying the polymer to remove as much moisture the polymer matrix,
c) mixing the leaf sieved myrtle (MU) obtained in step a) with the polymer matrix of step b), d) the mixture obtained in step c) incorporates at least one vegetable or organic oil selected from the group consisting of olive oil, sunflower oil, avocado oil, soy oil, soy lecithin or a mixture thereof olive oil (AO) as plasticizer agent, and e) extruding in melt, the mixture obtained in the previous step.

12. The method of claim 11, wherein in step a) myrtle leaves are screened in less than 75-85 µm size.

13. The method of claim 11, wherein in step b) a polymer PLA matrix is prepared.

14. The method of claim 11, wherein in step d) is incorporating olive oil.

15. The method of claim 1 1, wherein in step d) said plasticizer agent is incorporated in an amount in the range of 5-20% w/w based on the weight of the polymer matrix.

16. The method of claim 16 wherein in step d) said plasticizer agent is incorporated in an amount of 5% w / w based on the weight of the polymer matrix.

17. The method of claim 11, wherein in step c) myrtle leaf sieved is mixed in an amount in the range of 3-8% w/w based on the weight of the polymer mixture matrix.

18. The method of claim 18 wherein in step c) myrtle leaf sieved is mixed in an amount of 5% w/w based on the weight of the polymer matrix.

19. The method of claim 1 1, wherein step d) further comprises incorporating nanoclay into the mixture.

20. The method of claim 20 wherein said nanoclay is incorporated into the mixture in an amount of 5% w/w.

21. The method of claim 11, wherein further comprising the step f) transforming the extruded of step e) into a film.
